# EUROPEAN PATENT SPECIFICATION

(11) **EP 0 821 640 B1**
(45) Date of publication and mention of the grant of the patent: **14.06.2000**
(21) Application number: 96913178.8
(22) Date of filing: 26.04.1996
(51) Int. Cl.: B29B 9/06, B26D 7/26

(54) **UNDERWATER PELLETIZER**
UNTERWASSERGRANULIERVORRICHTUNG
GRANULATEUR IMMERGE

(30) Priority: 28.04.1995 US 431242; 28.04.1995 US 431240; 15.12.1995 US 572913
(43) Date of publication of application: 04.02.1998
(73) Proprietor: SHELL OIL COMPANY, Houston, Texas 77252-2463 (US)
(72) Inventor: HARRIS, Ronald, David, Houston, TX 77077 (US); WOOD, Robert, Branch, Belleville, TX 77418 (US); MA, Chin-Yuan, George, Sugar Land, TX 77479 (US); SECRIST, Jerry, Wayne, Houston, TX 77063 (US)
(74) Representative: Price, Nigel John King
(86) International application number: US9605822
(87) International publication number: WO9633853

(56) References cited:
- GB-A- 1 220 399
- GB-A- 2 124 964
- US-A- 3 324 510
- US-A- 3 673 298
- US-A- 4 099 900
- US-A- 4 321 026
- US-A- 4 621 996

## Description

### Technical Field

This invention relates to underwater thermoplastic pelletizers and, in particular, to underwater pelletizers having improved means for cutting thermoplastic strands into pellets. This invention also relates to an improved method for preventing extruded material from agglomerating in an pelletizing assembly. This invention further relates to an improved process for producing pellets of thermoplastics, particularly ultra low melt viscosity polyolefins.

### Background Art

The pelletization of extrudable materials is of considerable importance for many applications. Pellets, unlike ingots or bars, readily flow in measuring and dispensing apparatus and the size of pellet charges can be readily controlled to small tolerances. Moreover, unlike powders, they do not form dust and are not ingested by persons working with them. Thus, they provide a highly convenient form for the packaging, storage and use of many thermoplastic polymers, food products, etc.

Underwater pelletizers are known which employ a rotating disc cutter to cut or sever stranded polymer as it exits from the die plate of an extruder. The cutting is accomplished in a chamber full of circulating water which functions to cool the strand and also to carry away the cut pellets. The prior art disc cutters are of two types: (1) knives which extend radially from a central hub or (2) multiple blades which are attached to spoked hubs.

Attempts to use the prior art disc cutters to pelletize extrudable materials such as fluidic materials which require a relatively long time to solidify have resulted in agglomeration of extruded materials in the pelletizers. The extruded materials often are trapped in the area between the cutting hub and the die face and agglomerates into "trashouts". The extruded materials also agglomerate and wrap around the extended knife blades.

It is known that ultra low melt viscosity polymers are useful for the production of a variety of products such as adhesives, sealants, coatings, non-woven fabrics by melt blown fiber processes, injection-molded components made at a high rate, etc. An ultra low melt viscosity polymer has a melt viscosity of about 300,000 centipoise (hereinafter "cps") or lower. The melt viscosity of an ultra low melt viscosity polymer can be as low as 500 cps or smaller.

Pelletization of thermoplastic polymers, especially high melt flow thermoplastic polyolefins, have been particularly difficult using prior art underwater pelletizers. This problem is especially eminent in the production of ultra high melt flow and ultra low viscosity adhesive grade butene-1-ethylene copolymers which contains from about 0.1 to 8 wt% of ethylene which are cracked by a free radical generator. The problem appears to relate to the slow crystallization rate of these polymers which exhibit extreme tackiness in pelletizing. It is known that as the pellets leave the cutting blades, they are very tacky and collide with other pellets to form agglomerates. With a longer residence time, the pellets change to an opaque color, as they complete their crystallization, become dense and lose their tackiness. Excessive turbulence around the trailing edges of the knives also contribute to the agglomeration problem. These agglomerates wrap around the cutting blades and create smears and chunks, plugging the pelletizer chamber, the spin dryer and the area between the die and hub. The extrusion line has to be shut down in order to clean the plugged section resulting in undesirable production interruptions. The agglomerations also result in an excess amount of non-uniform or malformed pellets which may be described by terms such as tailed pellets, long-string pellets, pellet marriages, elbows, dog bones, and pellet trash which are undesirable.

Referring to FIG. 1 and FIG. 2, US-A-4,621,996, issued November 11, 1986, and assigned to Gala Industries, proposes a conventional underwater plastic pelletizing machine which includes a number of flat cutting blades 21, mounted on a spoked hub 23 on a driven shaft 25 so that the extruded strand of plastic will be cut into a plurality of pellets. The cutting blades 21 proposed project outward, according to the drawing, from the spoked hub 23. There is a gap 29 between the spoked hub and the die face. This cutter design would not process a high melt flow, adhesive grade polymer properly because polymer smears in long strands and wraps around the cutting blades 21 and sharp edges on the hub 23. This is particularly true when the polymer processed has a relatively low viscosity, high tackiness and long crystallization time which make underwater pelletizing very difficult. It is known that excessive turbulence around the trailing edges of the knives also contributed to the wrapping problem.

It is also known that the extruded polymer pellets are entrapped in the gap 29 between the die face 31 and the hub creating smears and chunks, and thus plugging up the pelletizer. It is not practical to use this prior art pelletizer to pelletize adhesive grade ultra high melt flow polybutene-1-ethylene described above because of the frequency of shut downs required for cleaning up the plugged section.

As used herein, a high melt viscosity polymer is a polymer having a melt viscosity 1,000,000 cps or more; and an ultra low melt viscosity polymer is a polymer having a melt viscosity of about 300,000 cps or lower. A polymer with a melt viscosity of about 300,000 cps will have a melt index of approximately 100 dg/min, and is generally regarded as an ultra high melt flow rate polymer with an ultra high melt index. As used herein, the melt viscosity is measured by Brookfield Viscometer using ASTM D2556 at 177 °C (350°F), unless otherwise specified e.g. as measured at 135°C (275°F). As used herein, the melt flow rates or melt indices are measured by ASTM 1238 condition E at 190°C and 2.16 kg wt.

US-A-4 321 026 discloses an apparatus in which extruded strands of polymer are precooled prior to cutting. The extruded strands are not cut immediately they are extruded. Instead, following extrusion they are passed down oversized bore holes through which cooling water is flowed. In this way the extruded strands are cooled and made less tacky. The cooled strands are cut by rotary cutters upon exiting from the downstream end of the oversized boreholes.

### Brief Description of the Drawings

FIG. 1 is a vertical sectional view of the prior art underwater pelletizer, disclosed in US-A-4,621,996, with flat cutting blades mounted on a spoked hub secured on a driven shaft. There is a gap between the spoked hub and the die face.

FIG. 2 is a front view on the line 2--2 of FIG. 1 of the prior art underwater pelletizer disclosed in US-A-4,621,996.

FIG. 3 is a vertical sectional view of a pelletizer of the second preferred embodiment of the present invention having a shroud of an annular ring fitted to the outer periphery of the cutting hub. The outer periphery of the shroud is held to a close clearance to the inner diameter of the raised die ring to effect a barrier against pellet migration. The cutting blades are contoured to conform to the outer periphery of the shroud eliminating any gaps between the cutting blades and the outer periphery of the cutting hub.

FIG. 4 is a partially sectional view of the arrangement of the shroud, cutting hub, die ring and cutting blades according to a second preferred embodiment of the present invention.

FIG. 5 is a fragmental section on the line 5--5 of FIG. 4, on an enlarged scale, showing the interface of the shroud, cutting hub, die ring and cutting blades when a cutting blade is relatively new. The edge of the shroud is not in contact with the bottom surface of the recess of the die face.

FIG. 6 is a fragmental section on the line 5--5 of FIG. 4, on an enlarged scale, when a cutting blade has been worn and the cutting has been advanced. The edge of the shroud is wearing against the bottom of the recess of the die face.

FIG. 7 is a front view on the line 7--7 of FIG. 4, viewing from the side furthest from the die according to the first specific embodiment of the present invention.

FIG. 8 is a rear view of the cutting hub of FIG. 7 viewing from the side closest to the die.

FIG. 9 is a fragmental section on the line 9--9 of FIG. 8 illustrating the mounting of the cutting blade to the cutting hub of FIG. 8.

FIG. 10 is a fragmental side-view on the line 10--10 of FIG. 8 of the cutting assembly of FIG. 8 showing the shroud extending slightly beyond the cutting plane of the cutting blade, and the bottom portion of the annular ring being thinner than the upper portion.

FIG. 11 is a fragmental sectional view, of the cutting assembly according to a second specific embodiment of the present invention having a cup shaped shroud which does not change position as the cutting blades are worn and advanced. Cutting blades are bolted to the outer surface of the cutting hub and a backcover is bolted to the outer side of the cutting hub to prevent pellet agglomeration at the outer side of the cutting hub. The backcover has a skirt to close the gap in the slot for insertion of the blade, said gap is formed from hub and blade advancement as cutting blades are worn.

FIG. 12 is a fragmental sectional view of the cutting assembly of FIG. 11 showing the cutting hub advanced toward the die face as the cutting blades are worn and advanced while the shroud remains at the same position.

FIG. 13 is a vertical sectional view of a pelletizer of the third preferred embodiment of the present invention having a cup-shaped shroud fixedly mounted to the recess in the center of a die ring. The shroud is held to a minimum clearance to the inner surface of the hub to effect a barrier against pellet migration. The cutting blades are contoured to conform to the outer periphery of the shroud and hub thereby eliminating any gaps between the cutting blades and the outer periphery of the cutting hub and the shroud.

FIG. 14 is a front view of FIG. 13, viewing from the side furthest from the die, illustrating the arrangement of the shaft, cutting hub, die ring and cutting blades according to a third preferred embodiment of the present invention.

### Detailed Description of the Preferred Embodiments

The present invention in its broadest scope relates to a pelletizing assembly for pelletizing an extruded material, said pelletizing assembly comprising:

A pelletizing assembly for pelletizing an extruded material, said pelletizing assembly comprising:
an extrusion die plate comprising:
   a die face at a downstream side of the die plate;
   a die ring formed on the downstream side of the die face having a wear surface projecting outwardly from the die surface to form a recess in the center of the die ring, and said recess having a bottom surface at the downstream side of said die plate ; and
   a channel means extending from upstream side of the die plate to the die face adapted to deliver the extruded material from the upstream side of the die plate to the die face for extrusion, and said channel means forming an orifice in the die face for extruded material to exit the die plate;
a cutting assembly mounted for rotation adjacent the die face, said cutting assembly comprising:
   a hub attachable to a driving shaft for rotation in spaced relation with the die face;
   a cutting element mounted on the hub for rotation therewith, said cutting element having a cutting edge for movement adjacent the downstream surface of die plate; and
   a first surface on the cutting assembly corresponding to a second surface on the extrusion die plate such that an interface is established between the cutting assembly and the extrusion die which permits free rotation of the cutting assembly and forms a barrier to prevent pellet migration between the hub and said bottom surface of said recess in the center of said die ring.

The first surface can be a barrier element or alternatively the second surface can be a barrier element.

The problems and disadvantages of the prior art pelletizer, as described above, are avoided or at least minimized by using the pelletizing assembly of the present invention.

The invention also provides a process for preventing material from agglomerating in a pelletizing assembly using the pelletizer described above.

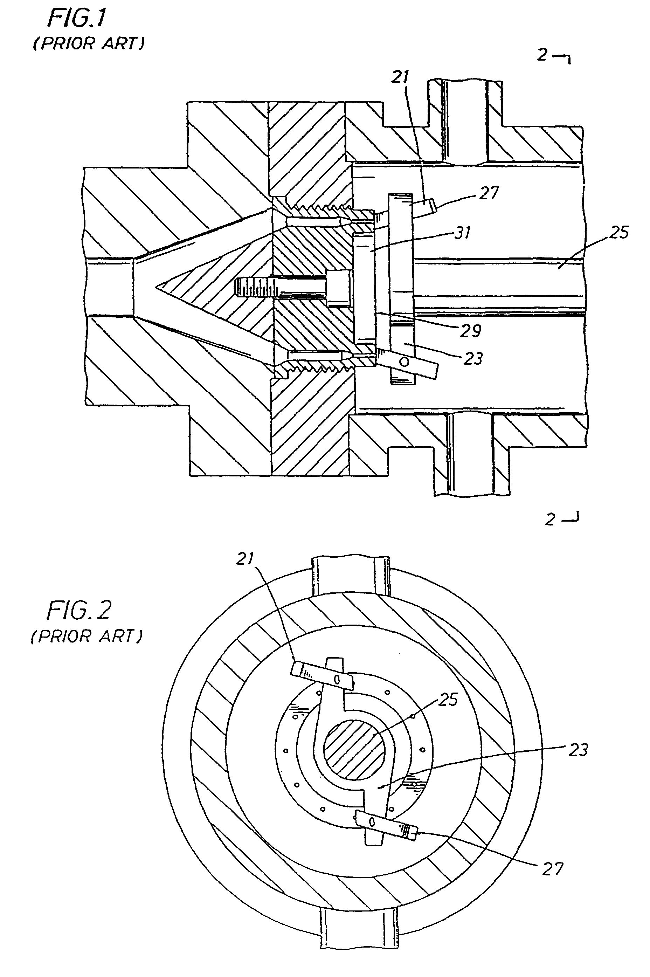

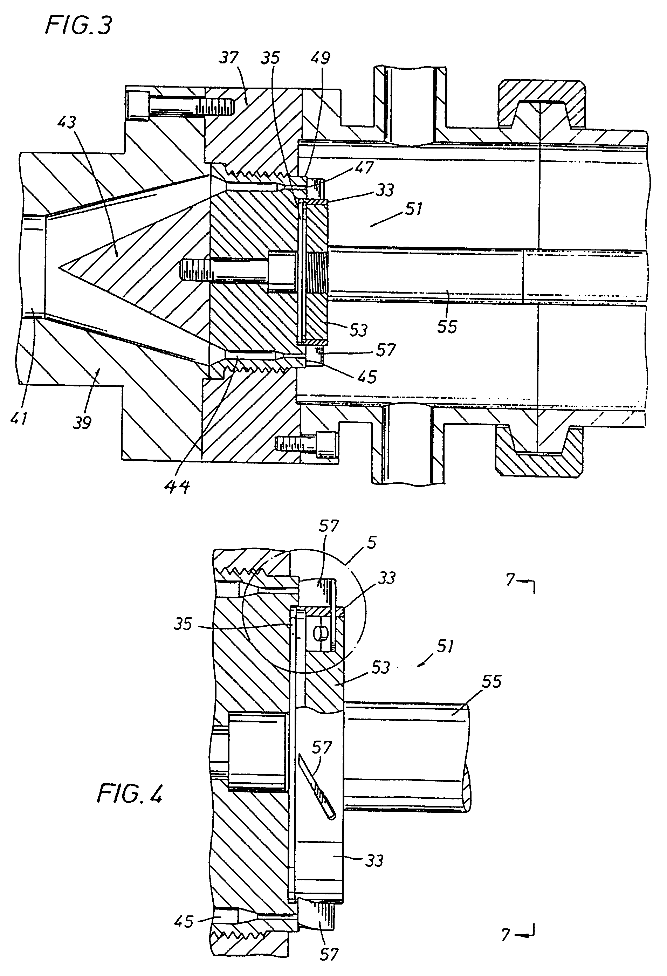

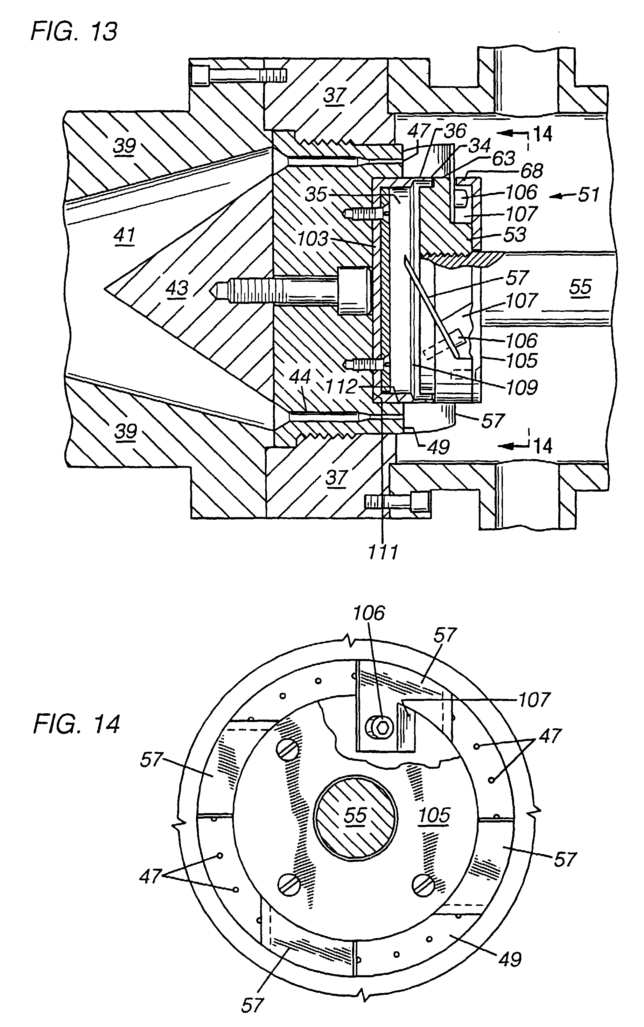

Referring to FIGs. 3-14, the present invention further relates to the use of a shroud 33 (Fig. 3) or 103 (Fig. 13), fixedly mounted on either the circular hub or the surface of the recess in center of the die ring to prevent agglomeration in various agglomerate inviting sites in the pelletizer such as the gap 35 between the die face and the cutting hub, the sites where the cutting blades are mounted, areas around the cutting blades, the area between the inner surface of the cutting blades and the hub and shroud, etc.

The present invention will be described and illustrated by the following embodiments, which are provided for illustration purpose only and not intended to limit the scope of the instant invention.

Reference is first made to FIGs. 3-10 which illustrate an improved underwater pelletizer according to the first preferred embodiment of the'present invention.

Referring to FIG. 3, the pelletizer comprises, in substance, a die plate 37 having a plurality of circumferentially spaced and radially disposed bores or recesses 39 which receive electrically operated heating cartridges for heating die plate in a well known manner. The die plate can also be steam heated via channels formed in the die. The adapter 39 and the die plate 37 include an inlet passageway 41 for extrudable material such as thermoplastic polymer which is diverted by a nose cone 43 through a plurality of channels 44 so that the extrudable material is extruded in a continuous ribbon or strand from the orifices 47 of the die face 45 which is the downstream side of the die plate. The die face 45 is provided with a wearable surface forming a circular die ring 49 projecting outwardly from the die face toward the hub, i.e. elevated or raised from the die face. Since the wearable surface on the die ring is elevated or projecting outwardly from the die face, it forms a recess or a bowl shaped cavity 35 which invites agglomeration of the pellets. The die ring 49 has a width which is substantially equal to that of the cutting edge of the cutting blades 57 thereby establishing an even wear of the cutting edge of the cutting blades and the die ring, as cutting blades 57 are wearing against the die ring 49 during the pelletizing operation. When the cutting edge of the cutting blades 57 are wider than the die ring, the cutting edge of the blades would not wear evenly. This can lead to a "crowning" of the inside and/or outside edges of the die and possible damage to the die plate body as the knives wear into softer material. When the cutting edge of the cutting blades are narrower than the die ring, there would be groove formation on the die ring over which a new cutting blade 57 may not track properly on the die ring.

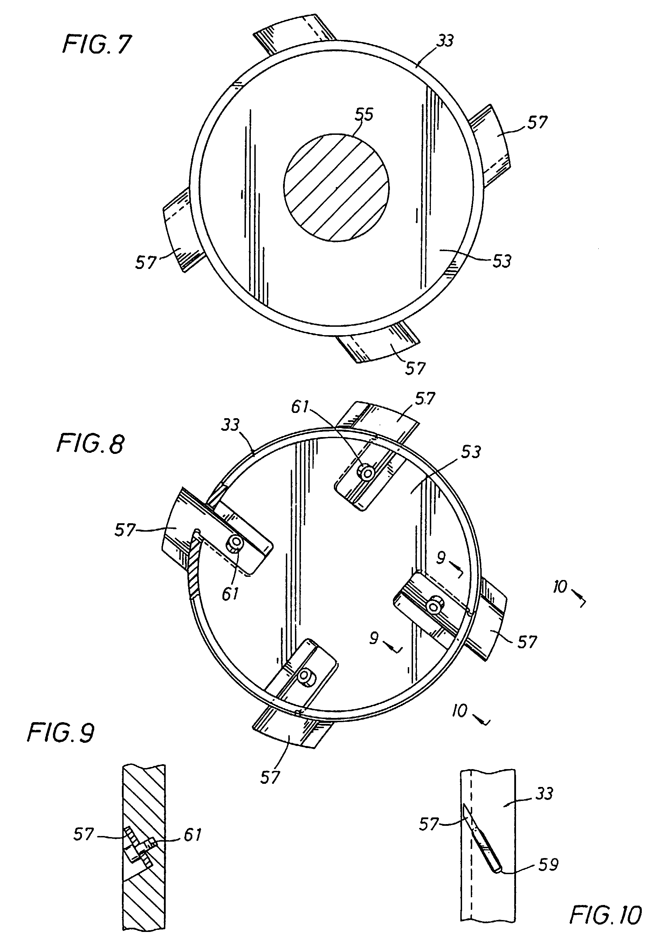

Associated with the wearable surface, formed on the die ring 49, is a multi-bladed rotatable cutting assembly 51. Referring to FIGs. 7 and 8, the cutting assembly 51 includes cutting blade(s) 57 mounted on a circular hub 53 for rotation. The hub is attachable to a shaft 55 (see FIGs. 3-4) having a center axis of rotation and rotatable coaxially to the die face 45, so that the extruded ribbon or strand of material will be cut into a plurality of pellets. The sizes and dimensions of all the parts depend upon the size of the pelletizers. The number of cutting blades mounted on the cutting assembly also varies with the type and size of the pelletizer, non-limiting range of the number of blades is from 1 to about 500.

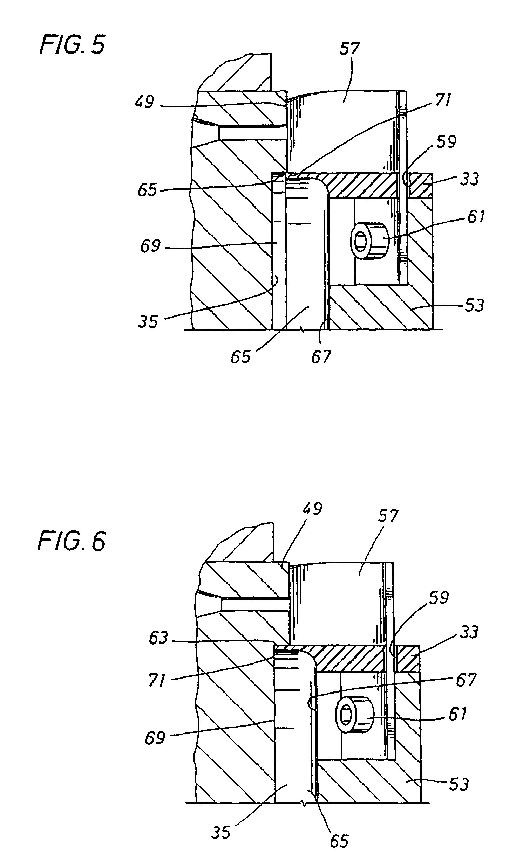

As a specific aspect of the first preferred embodiment of the present invention, a protective ring element of shroud element 33 such as skirt-like annular ring or liner is snugly fitted to the outer periphery of the hub 53 (see FIG. 5 & FIG. 6). The shroud 33 has a slot 59 to permit the insertion of the cutting blades which are mounted on the hub 53 by any suitable means such as a bolt or screw 61 as shown in FIG. 9.

Referring to FIG. 5 and 6, the outer diameter of the shroud 33 is substantially equal to the inner diameter of the die ring 49 thereby allowing the cutting edges of the cutting blades 57 to be in close contact with the wear surface of the die ring 49. In pelletizing operations, the cutting blades rotate with the hub following the die ring as the track. Preferably, a minimal clearance exist between the shroud and the die ring to permit free rotation. The outer periphery of the shroud is held to a close tolerance to the inner diameter of the die ring to effect a barrier against pellet migration.

As non-limiting illustrative example, the outer diameter of the shroud is slightly smaller, e.g. from about O.Olmm to about 0.25 mm smaller, than the inner diameter of the die ring to allow a portion of the skirt 63 adjacent to the die ring to be inserted or protruded in to the bowl-like recess or cavity in the center of the die ring. In a non-limiting example of the hub design of the first specific embodiment of the present invention, the inner surface of the hub 67 is downstream from the cutting plane of the cutting blade and thereby forming a gap 65 between the inner surface of the hub 67 and cutting plane or downstream surface of the die ring 49 of the cutting blade. The shroud substantially covers the bowl-shaped recess or cavity 35 thereby preventing the pellets from entering the recess or cavity 35 and the space 65 under the hub.

In a prior art pelletizer, without the shroud, the pellets, especially high melt flow thermoplastic polymers having slow crystallization rate, tend to agglomerate within the gap or chamber between the inner surface of the hub 67 and the bottom surface 69 of the recess. The present shroud 33 forms a seal or barrier thereby effectively prevents the pellets from entering the gap between the inner surface of the hub 67 and the bottom 69 surface of the recess thereby substantially prevents pellet recirculation under the hub, thus eliminating agglomeration of the pellets in the gap and the inner surface 67 of the hub. The cutting blades are bolted on the inner side of the hub, thus there are no notches, slots or screw head for the polymer to hang on. Since the shroud also prevents pellets from entering the inner surface 67 of the hub, the shroud 33 thus prevents pellet agglomeration at the screw 61 and the area adjacent to the screw which would otherwise invite trapping and agglomeration of the polymer.

As a specific embodiment of the first preferred embodiment of the present invention, a portion of the shroud 71 at the upstream side facing the die protrudes into the recess formed by the die ring and being wearable against the bottom surface 69 of the recess when the cutting blades along with the hub are advanced toward the die to compensate for the reduction in the length of the blade caused by the wearing of the cutting blades. FIG. 5 shows an edge 71 of the shroud not in contact with bottom surface of the recess 69 of the die face when the cutting blades are relatively new. FIG. 6 illustrates the wearing of the edge of the shroud 71 against the bottom of the recess 69, when a cutting blade has been worn and the cutting hub has been advanced.

As another specific embodiment of the first preferred embodiment of the present invention, a portion of the shroud 71 at the upstream side facing the die is thinner than the remaining portion of the shroud thereby reducing the amount of scrap material generated from the wear of the shroud.

The shroud is made of any suitable material. Where the shroud is wearable, it is preferred that the shroud is made of a material compatible with the material for making the pellets. Non-limiting examples of such materials include polyethylene, polypropylene, Teflon, Nylon, phenolic resin, polyacrylic polymer, polyester, polycarbonate, etc.

The cutting blades 57 are mounted to the hub, preferably to the inner surface of the hub and rotate during a pelletizing operation in close contact with the downstream surface of the die ring 49. Since the pellets are prevented from contacting the inner surface by the shroud, mounting the cutting blades to inner surface 67 effectively prevents the agglomeration of the pellets around the bolts and screws 61.

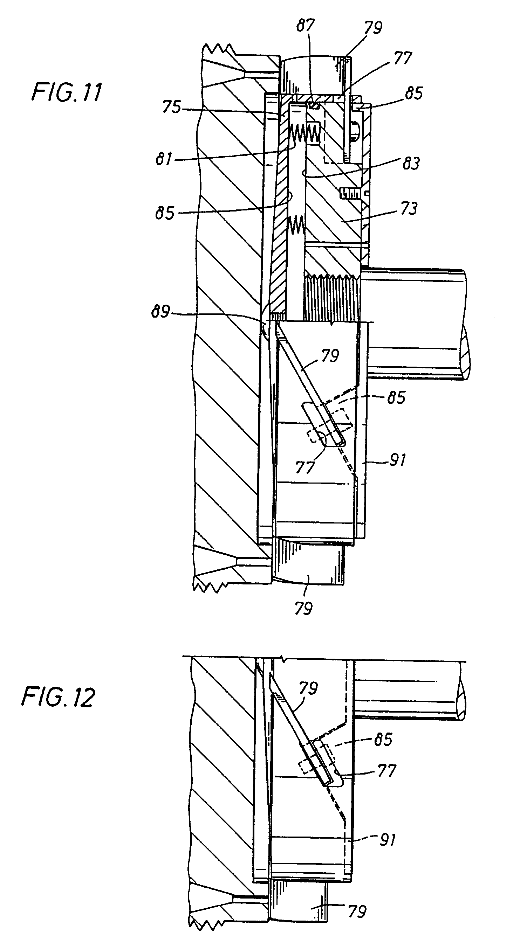

Reference is now made to FIGS. 11-12 which show another form of pelletizer according to the second preferred embodiment of the present invention.

As there shown, the cutting assembly comprises a backplate or hub 73 of circular configuration having a cup-shaped shroud 75 fixedly mounted on the outer periphery and inner surface of the cutting hub. The cup-shaped shroud has a slot 77 at the outer periphery of said shroud to permit the insertion of the cutting blades 79. Spring(s) 81 are secured between the inner surface of the hub 83 facing the die and inner bottom side 85 of the cup-shaped shroud to keep the cup-shaped shroud in the desired position relative to the die plate when the hub along with the knives are advanced toward the die to compensate for wearing of the knives 79.

Similar to the shroud described in the first preferred embodiment of the present invention, the cup-shaped shroud element has an outer diameter substantially equal to the inner diameter of said die ring thereby allowing said cutting edge of the cutting element moving adjacent the downstream surface of the die ring, and an interface is established between the shroud and the surface of the die ring which permits free rotation of the cutting assembly and forms a barrier to prevent pellet migration between bottom surface of the cup-shaped shroud and the bottom surface of said recess on the die face.

The cutting blades are secured to the outer surface of the hub, and said slot on the outer periphery of the shroud for insertion of the cutting element has a size and a shape with sufficient clearance adapted to allow advancement of the hub and the cutting element affixed thereto to compensate for the wear of the cutting edge of the cutting blades. The shroud touches the bottom surface of the recess on the die face via a hard button 89 to minimize wear and friction.

There is a backcover 91 secured to the hub having the outer diameter substantially equal to the outer diameter of the hub to prevent thermoplastic material from agglomerating at the outer surface of the hub and at the sites where the cutting blades are affixed to the hub.

As a specific aspect of the second preferred embodiment, the backcover has an axial extension 85 adapted to cover the a hole in the slot located on the outer periphery of the shroud formed from the advancement of the hub, thereby reducing the areas where pellets can agglomerate. In this embodiment, as the cutting blades or knives wear from close contact with the die ring, the hub and the cutting blades are advanced toward the die with the springs(s) 81 being pressed to a shorted length. As shown in FIG. 12, the relative position of the shroud to the die remains unchanged as the hub is advanced. An 0-ring 87 located between the inside of the cup-shaped shroud and the outer periphery of the hub serves to provide sufficient friction to cause the shroud 75 to rotate with the hub 73 driven by the shaft during pelletizing operation, as well as center of the shroud with respect to the hub.

Suitable material for the non-wearing type of shroud can also be made of the polymers described above or metal, such as stainless steel, aluminum, brass, bronze, etc.

Reference is now made to FIGs. 13-14 which illustrate an improved underwater pelletizer according to the third preferred embodiment of the present invention.

As a specific aspect of the third preferred embodiment of the present invention, a protective cup-shaped shroud element 103 is fixedly mounted on the surface of the recess or bowl-shaped cavity in the center of the die ring to prevent agglomeration in various agglomerate inviting sites in the pelletizer. The outer diameter of the shroud 103 is substantially equal to the inner diameter of the die ring 49. The downstream edge 34 of the shroud facing the hub is held to a minimum clearance with the inner face of the hub. The outer periphery 36 of the shroud is held to a minimum clearance to the inner surface of the cutting blades. These special features of the shroud effect a barrier against pellet migration between the die face and the hub, and also permit free rotation of hub. In pelletizing operations, the cutting blades rotate with the hub following the die ring as the track and allowing the cutting edges of the cutting blades 57 to be in close contact with the wear surface of the die ring 49.

In a non-limiting example of the hub design of the third specific embodiment of the present invention, the inner surface of the hub 109 is downstream from the cutting plane of the cutting blade and thereby forming a gap 35 between the inner surface of the hub 109 and the bottom surface 111 of the recess. The shroud substantially covers the bottom surface 111 and side surface 112 of the bowl-shaped recess or cavity 35 thereby preventing the pellets from entering the recess or cavity 35 and the space under the hub.

In a prior art pelletizer, without the shroud, the pellets, especially high melt flow thermoplastic polymers having slow crystallization rate, tend to agglomerate within the gap or chamber between the inner surface of the hub and the bottom surface of the recess. The present shroud 103 forms a seal or barrier thereby effectively prevents the pellets from entering the gap between the inner surface of the hub 109 and the bottom 111 surface of the recess thereby substantially prevents pellet recirculation under the hub, thus eliminating agglomeration of the pellets in the gap and the inner surface 109 of the hub. The cutting blades are bolted on the outer (downstream) side of the hub which is preferably covered by a back cover, thus there are no notches, slots or screw heads for the polymer to hang on.

As a specific embodiment of the third preferred embodiment of the present invention, at least a portion of the shroud at the side facing the hub being wearable against the inner surface of the hub as the cutting assembly is advanced toward the die to compensate for the wearing of the cutting blades. Optionally at least a portion of the shroud 34 at the side facing the hub being thinner than the remaining portion of the shroud thereby reducing the amount of scrap material generated from the wear of the shroud; and optionally a portion of the hub at the inner side facing the die has a portion with a smaller diameter thereby creating a recess or a shoulder 63, said shoulder 63 is designed to be sealingly interfacing with the shroud 103 to prevent pellet migration into the space 35.

The cutting blades 57 are mounted to the hub, preferably to the outer/downstream side of the hub and rotate during a pelletizing operation in close contact with the downstream surface of the die ring 49. Optionally, there is a back cover 105 fixedly attached to the hub thereby effectively preventing the agglomeration of the pellets around the mounting bolts or screws 106. Optionally, the hub at the downstream side, facing the die, is recessed at the outer periphery to accommodate the mounting bolts 66 for holding the cutting blades 57; and the back cover 105 optionally has an extension 68 which extends into the recess 107 which accommodates the cutting blades 57 so as to prevent pellet migration and agglomeration in the recess 107 and around the mounting bolts or screws 106.

In a fourth embodiment of the present invention, a shroud element 103 is in a form of a skirt-like annular ring or liner fixedly mounted to the inner surface of the die ring, i.e. the surface the bowl-shaped cavity/recess, especially the side surface 112 of the cavity/recess.

Similar to the shroud described in the third embodiment of the present invention, the skirt-shaped shroud element has an outer diameter substantially equal to the inner diameter of said die ring. The downstream edge 34 of the shroud facing the hub is held to a minimum clearance with the inner face of the hub. The outer periphery 36 of the shroud is held to a close tolerance to the inner surface of the cutting blades. These special features of the shroud effect a barrier against pellet migration between the die face and the hub, and also permit free rotation of hub. Other features are similar to that described in the first embodiment of the present invention.

In each of the foregoing embodiments, the cutting blades 57 engage the surface of the die ring at an angle selected from about 10° to about 60°, preferably from about 20° to about 40°, and still more preferably from about 30° to about 36°. A low incident angle not only enables a clean cut, instead of smearing, of the extrudate but also minimizes turbulence in the surrounding cooling water. Turbulence in the cooling water is undesirable because it results in sharp changes in flow directions which tends to both distort still molten pellets and can lead to pellet recirculation and agglomeration in stagnant areas. The low incidence angle used in the present cutting assembly also reduces or eliminates the cavitation zone that forms in the zone behind the cutting blades. Other prior art blunt designs with higher incidence angles may lead to the formation of a vapor pocket on the trailing edge of the knives. This vapor pocket rotates with the blades and acts as an insulating medium between the surrounding cooling water and the face of the die ring. As a consequence the die face runs hotter than if cooling waster was in contact with the die, thereby increasing the likelihood of smearing of the extruded material and producing non-discrete pellets.

The cutting blades of the present invention have cutting edges parallel to plane of rotation of the hub. The width of the cutting edge of the cutting blade is substantially equal to that of the die ring, and the cutting blades have inner edges contoured to conform in its angular position to curvature of the outer periphery of the shroud and are in continuous contact with, or has minimal clearance with, the outer periphery of said shroud thereby substantially eliminating gap between inner surface of cutting blade and the outer periphery of the shroud. The outside edges of the cutting blades are contoured in the same curvature as the inner edges so that the width of the cutting edges remain constant as the cutting blades wear.

As an illustrative example, in operation, hot thermoplastic material is continuously extruded through the orifices of the die ring in the form of hot thermoplastic rods or strands and are cut into short lengths or pellets by the knives operatively in contact with the die ring. The pelletizer is immersed in water. The pellets are quickly cooled by the water and carried in suspension from the housing to a collection station.

The fifth preferred embodiment of the present invention relates to a process or a method for preventing material from agglomerating in an pelletizing assembly using the pelletizing assemblies described above.

In an prophetic illustrative example, an ultra low melt viscosity thermoplastic polymer having a melt viscosity of 300,000 or lower measure by Brookfield Viscometer using ASTM D2556 at 177°C (350°F), and a melt index of about 100 dg/min or higher measured by ASTM 1238 condition E at 190°C and 2.16 kg wt. is extruded using a pelletizer according to the present invention. Specifically, a polymeric feedstock comprising an ultra low melt viscosity thermoplastic butene-1-ethylene copolymer consisting essentially of (i) from about 92 wt % to about 98 wt% of butene-1 and (ii) from about 2 wt% to about 8 wt% of ethylene is extruded using a pelletizer of the present invention. The underwater pelletizer will produce ultra low viscosity polymer pellets without shut-down of the extrusion/pelletization line due to plug-up of the pelletizer for an extensive period of time. This will compare favorable over the prior art pelletizer described in the Background of Invention.

In each of the foregoing embodiments, the number of blades of the rotary cutter member should by no means be limited to the illustrated examples and may be any other number which is more than one.

The ranges and limitations provided in the instant specification and claims are those which are believed to particularly point out a distinctly claim the instant invention. It is, however, understood that other ranges and limitations that perform substantially the same function in substantially the same manner to obtain the same or substantially the same result are intended to be within the scope of the instant invention as defined by the instant specification and claims.

## Claims

1. A pelletizing assembly for pelletizing an extruded material, said pelletizing assembly comprising:
an extrusion die plate (37) comprising:
a die face (45) at a downstream side of the die plate (37);
a die ring (49) formed on the downstream side of the die face (45) having a wear surface projecting outwardly from the die surface to form a recess (35) in the center of the die ring (49), and said recess having a bottom surface (69,111) at the downstream side of said die plate (37) ; and
a channel means (44) extending from upstream side of the die plate (37) to the die face (45) adapted to deliver the extruded material from the upstream side of the die plate to the die face for extrusion, and said channel means forming an orifice (47) in the die face (45) for extruded material to exit the die plate (37);
a cutting assembly (51) mounted for rotation adjacent the die face (45), said cutting assembly comprising:
a hub (53,73,109) attachable to a driving shaft (55) for rotation in spaced relation with the die face (45);
a cutting element (57,79) mounted on the hub (53) for rotation therewith, said cutting element having a cutting edge for movement adjacent the downstream surface of the die plate; and
a first surface on the cutting assembly (51) corresponding to a second surface on the extrusion die plate (37) such that an interface is established between the cutting assembly and the extrusion die which permits free rotation of the cutting assembly and forms a barrier to prevent pellet migration between the hub (53) and said bottom surface (69,111) of said recess (35) in the center of said die ring (49).

2. A pelletizing assembly according to claim 1, wherein said cutting assembly (51) comprises a shroud element (33,75,103), said first surface is located at the upstream side of said shroud element and faces the recess (35) in the center of the die ring (49), said shroud element has an outer diameter substantially equal to the inner diameter of said die ring (49) thereby allowing said cutting edge of the cutting element (57) moving adjacent the downstream surface of the die ring, and an interface is established between said first surface on said shroud element (33) and the second surface of the die plate (37) which permits free rotation of the cutting assembly (51) and forms a barrier to prevent pellet migration between inner surface of the hub (53) and the bottom surface of said recess (35) in the center of the die ring.

3. A pelletizing assembly according to claim 2, wherein the hub (53) is a circular plate having a center axis of rotation and rotatable coaxially to the die face (45), said hub having an inner surface facing the die face, an outer surface adjacent the shaft, and an outer periphery,
said shroud element (33,75) is fixedly mounted on outer periphery of the hub, and said shroud element having a slot to permit the insertion of the cutting element (57,79) which is affixed to the inner surface of the hub facing the die, said cutting element engages the surface of the die ring (49) at an angle selected from about 10° to about 60°,
said cutting element (57,79) has a cutting edge parallel to plane of rotation of the hub, the width of the cutting edge of the cutting element is substantially equal to that of said die ring,
said cutting element (57,79) is a cutting blade having an inner edge contoured to conform in its angular position to curvature of the outer periphery of the shroud and has minimal clearance with the outer periphery of said shroud element (33,75) thereby substantially eliminating any gap between an inner surface of cutting blade and the outer periphery of the shroud element, and
said cutting element has an outside edge contoured substantially concentric to the inner edge so that the width of the cutting edge remains constant as the cutting element wears.

4. A pelletizing assembly according to claim 3, wherein a portion of the shroud (33) at the side facing the die protrudes into the recess (35) formed by the die ring (49), and said portion (71) of the shroud protruded into the recess is wearable against the bottom surface of the recess as the cutting assembly (51) is advanced toward the die to compensate for the wearing of the cutting element (57).

5. A pelletizing assembly according to claim 2, wherein the hub (73) is a circular plate having a center axis of rotation and rotatable coaxially in spaced relation to the face of the die, said hub (73) having an inner surface facing the die face, an outer surface adjacent the shaft, and an outer periphery,
said shroud element (75) is a cup-shaped shroud fixedly mounted on the outer periphery and inner surface of said cutting hub, said cup-shaped shroud having a slot (77) at the outer periphery of said shroud to permit the insertion of the cutting element (79);
a spring (81) is secured between the inner surface of the hub (73) facing the die and inner bottom side of the cup-shaped shroud (75) to maintain the desired position of the shroud relative to the die plate; and
an interface is established between the cup-shaped shroud element (75) and the surface of the die ring which permits free rotation of the cutting assembly and forms a barrier to prevent pellet migration between bottom surface of the cup-shaped shroud and the bottom surface of said recess on the die face.

6. A pelletizing assembly according to claim 1, wherein said pelletizing assembly comprises a shroud element (103) fixedly mounted to the surface of said recess in the center of the die ring (49), said shroud element has an outer diameter substantially equal to the inner diameter of said die ring (49), said second surface is the downstream edge (34) of said shroud element, and an interface is established between the downstream edge (34) of the shroud element (103) and the inner surface of the hub (53) which permits free rotation of the cutting assembly and forms a barrier to prevent pellet migration between inner surface of the hub and the bottom surface of said recess on the die face.

7. A pelletizing assembly as described in claim 6, wherein the hub (53) is a circular plate having a center axis of rotation and rotatable coaxially to the face of the die, said hub having an inner surface facing the die face, an outer surface adjacent the shaft, and an outer periphery; wherein the outer periphery of the shroud element (103) is held to a minimum clearance to the inner surface of the cutting element (57);
wherein said cutting element (57) engages the surface of the die ring (49) at an angle selected from about 10° to about 60°;
wherein said cutting element (57) has a cutting edge parallel to plane of rotation of the hub (53), the width of the cutting edge of the cutting element is substantially equal to that of said die ring (49),
wherein said cutting element (57) has an inner edge contoured to conform in its angular position to curvature of the outer periphery of the shroud (103) and has minimal clearance with the outer periphery of said shroud thereby substantially eliminating the gap between inner surface of cutting element and the outer periphery of the shroud, and
wherein said cutting element (57) has an outside edge contoured substantially concentric to the inner edge so that the width of the cutting edge remains constant as the cutting element wears.

8. A pelletizing assembly according to claim 7, wherein a portion of the shroud (103) facing said hub (53) is wearable against the inner surface of the hub as the cutting assembly is advanced toward the die to compensate for the wearing of the cutting element (57); wherein a portion of the shroud element at the side facing the hub is thinner in width than the remaining portion of the shroud thereby reducing the amount of scrap material generated from wearing of the shroud.

9. A pelletizing assembly according to claim 6, wherein said shroud element (103) is a cup-shaped element covering both the bottom surface and side surface of said recess, or a skirt shaped element mounted to the side surface of the recess.

10. A process for pelletizing a molten thermoplastic material in a liquid medium using a pelletizing assembly according to any of the preceding claims, the process comprising delivering extruded material from the upstream side of the dieplate to the die face to cause extruded material to exit the dieplate and rotating the hub to cause the cutting element mounted thereon to move adjacent the downstream surface of the dieplate whereby to pelletize the extruded material, the interface between the cutting assembly and the extrusion dye preventing pellet migration between the hub and the bottom surface of the recess.

## Patentansprüche

1. Granulier-Vorrichtung zum Granulieren eines extrudierten Materials, umfassend:
eine Extrusions-Werkzeughalteplatte (37) mit
einer Werkzeugstirnfläche (45) auf einer stromabwärts gelegenen Seite der Werkzeughalteplatte (37),
einem Werkzeugring (49), der auf der stromabwärts gelegenen Seite der Werkzeugstirnfläche (45) ausgebildet ist, eine Verschleißfläche aufweist, die von der Werkzeugfläche nach außen herausragt und in der Mitte des Werkzeugrings (49) eine Vertiefung (35) bildet, die auf der stromabwärts gelegenen Seite der Werkzeughalteplatte (37) eine Bodenfläche (69, 111) aufweist, und
einer Kanaleinrichtung (44), die sich von der stromaufwärts gelegenen Seite der Werkzeughalteplatte (37) zur Werkzeugstirnfläche (45) erstreckt, das extrudierte Material von der stromaufwärts gelegenen Seite der Werkzeughalteplatte zum Extrudieren an die Werkzeugstirnfläche abzugeben vermag und die Kanaleinrichtung in der Werkzeugstirnfläche (45) eine Öffnung (47) für das Austreten von extrudiertem Material aus der Werkzeughalteplatte (37) bildet,
eine Schneid-Vorrichtung (51), die an der Werkzeugstirnfläche (45) drehbar angeordnet ist, mit
einer Nabe (53, 73, 109), die zur Drehung im Abstand von der Werkzeugstirnfläche (45) an einer Antriebswelle (55) befestigbar ist,
einem Schneidelement (57, 79), das an der Nabe (53) drehfest angeordnet ist, wobei das Schneidelement eine Schneidkante zur Bewegung in der Nähe der stromabwärts gelegenen Fläche der Werkzeughalteplatte aufweist, und
einer ersten Fläche an der Schneid-Vorrichtung (51), die einer zweiten Fläche an der Extrusions-Werkzeughalteplatte (37) entspricht, derart, daß zwischen der Schneid-Vorrichtung und dem Extrusionswerkzeug eine Verbindung hergestellt ist, die eine freie Drehung der Schneid-Vorrichtung ermöglicht und eine Sperre bildet, die Granulatwanderung zwischen der Nabe (53) und der Bodenfläche (69, 111) der Vertiefung (35) in der Mitte des Werkzeugrings (49) verhindert.

2. Granulier-Vorrichtung nach Anspruch 1,
bei der die Schneid-Vorrichtung (51) ein Abdeckelement (33, 75, 103) umfaßt, die erste Fläche auf der stromaufwärts gelegenen Seite des Abdeckelementes angeordnet ist und gegen die Vertiefung (35) in der Mitte des Werkzeugrings (49) weist, wobei das Abdeckelement von einem Außendurchmesser ist, der dem Innendurchmesser des Werkzeugrings (49) im wesentlichen gleich ist, wodurch eine Bewegung der Schneidkante des Schneidelements (57) in der Nähe der stromabwärts gelegenen Fläche des Werkzeugrings ermöglicht ist, und eine Verbindung zwischen der ersten Fläche am Abdeckelement (33) und der zweiten Fläche der Werkzeughalteplatte (37) hergestellt ist, die eine freie Drehung der Schneid-Vorrichtung (51) ermöglicht und eine Sperre bildet, die Granulatwanderung zwischen der Innenfläche der Nabe (53) und der Bodenfläche der Vertiefung (35) in der Mitte des Werkzeugrings verhindert.

3. Granulier-Vorrichtung nach Anspruch 2,
bei der die Nabe (53) eine kreisrunde Scheibe ist, die eine Mitteldrehachse aufweist und gleichachsig mit der Werkzeugstirnfläche (45) drehbar ist, wobei die Nabe eine gegen die Werkzeugstirnfläche weisende Innenfläche, eine Außenfläche in der Nahe der Welle und einen Außenumfang aufweist,
das Abdeckelement (33, 75) am Außenumfang der Nabe befestigt ist und einen Schlitz aufweist, der das Einführen des Schneidelements (57, 79) ermöglicht, das an der gegen das Werkzeug weisenden Innenfläche der Nabe befestigt ist, wobei das Schneidelement an der Fläche des Werkzeugrings (49) unter einem Winkel anliegt, der zwischen etwa 10° und etwa 60° gewählt ist,
das Schneidelement (57, 79) eine zur Drehebene der Nabe parallele Schneidkante aufweist, wobei die Breite der Schneidkante des Schneidelements der des Werkzeugrings im wesentlichen gleich ist,
das Schneidelement (57, 79) ein Schneidmesser mit einem Innenrand ist, dessen Umriß in seiner Winkelstellung an die Krümmung des Außenumfangs der Abdeckung angepaßt ist und zum Außenumfang des Abdeckelements (33, 75) minimalen Abstand hat, wodurch jede Lücke zwischen einer Innenfläche des Schneidmessers und dem Außenumfang des Abdeckelements im wesentlichen beseitigt ist, und
das Schneidelement einen Außenrand von zum Innenrand im wesentlichen konzentrischem Umriß aufweist, so daß die Breite der Schneidkante im Verlauf der Abnutzung des Schneidelements gleich bleibt.

4. Granulier-Vorrichtung nach Anspruch 3,
bei der ein Abschnitt der Abdeckung (33) auf der gegen das Werkzeug weisenden Seite in die vom Werkzeugring (49) gebildete Vertiefung (35) ragt, und der genannte, in die Vertiefung ragende Abschnitt (71) der Abdeckung an der Bodenfläche der Vertiefung abnutzbar ist, wenn die Schneid-Vorrichtung (51) zum Ausgleich der Abnutzung des Schneidelements (57) zum Werkzeug hin vorgeschoben wird.

5. Granulier-Vorrichtung nach Anspruch 2,
bei der die Nabe (73) eine kreisrunde Scheibe ist, die eine Mitteldrehachse aufweist und im Abstand von der Werkzeugstirnfläche gleichachsig drehbar ist, wobei die Nabe (73) eine gegen die Werkzeugstirnfläche weisende Innenfläche, eine Außenfläche in der Nähe der Welle und einen Außenumfang aufweist,
das Abdeckelement (75) eine becherförmige Abdeckung ist, die am Außenumfang und der Innenfläche der Schneidnabe befestigt ist, wobei die becherförmige Abdeckung einen Schlitz (77) am Außenumfang der Abdeckung aufweist, der das Einführen des Schneidelements (79) ermöglicht,
zwischen der gegen das Werkzeug weisenden Innenfläche der Nabe (73) und der inneren Bodenseite der becherförmigen Abdeckung (75) eine Feder (81) angeordnet ist, welche die gewünschte Stellung der Abdeckung in bezug auf die Werkzeughalteplatte aufrechterhält, und
zwischen dem becherförmigen Abdeckelement (75) und der Fläche des Werkzeugrings eine Verbindung hergestellt ist, die eine freie Drehung der Schneid-Vorrichtung ermöglicht und eine Sperre bildet, die Granulatwanderung zwischen der Bodenfläche der becherförmigen Abdeckung und der Bodenfläche der Vertiefung in der Werkzeugstirnfläche verhindert.

6. Granulier-Vorrichtung nach Anspruch 1, die umfaßt: ein Abdeckelement (1β3), das an der Fläche der Vertiefung in der Mitte des Werkzeugrings (49) befestigt ist, von einem Außendurchmesser ist, der dem Innendurchmesser des Werkzeugrings (49) im wesentlichen gleich ist, die genannte zweite Fläche der stromabwärts gelegene Rand (34) des Abdeckelements ist, und zwischen dem stromabwärts gelegenen Rand (34) des Abdeckelements (103) und der Innenfläche der Nabe (53) eine Verbindung hergestellt ist, die eine freie Drehung der Schneid-Vorrichtung ermöglicht und eine Sperre bildet, die Granulatwanderung zwischen der Innenfläche der Nabe und der Bodenfläche der Vertiefung in der Werkzeugstirnfläche verhindert.

7. Granulier-Vorrichtung nach Anspruch 6,
bei der die Nabe (53) eine kreisrunde Scheibe ist, die eine Mitteldrehachse aufweist und gleichachsig zur Werkzeugstirnfläche drehbar ist, wobei die Nabe eine gegen die Werkzeugstirnfläche weisende Innenfläche, eine Außenfläche in der Nähe der Welle und einen Außenumfang aufweist,
bei der der Außenumfang des Abdeckelements (103) in kleinstmöglichem Abstand von der Innenfläche des Schneidelements (57) gehalten ist,
bei der das Schneidelement (57) an der Fläche des Werkzeugrings (49) unter einem Winkel anliegt, der zwischen etwa 10° und etwa 60° gewählt ist,
bei der das Schneidelement (57) eine zur Drehebene der Nabe (53) parallele Schneidkante aufweist, wobei die Breite der Schneidkante des Schneidelements der des Werkzeugrings (49) im wesentlichen gleich ist,
bei der das Schneidelement (57) einen Innenrand aufweist, dessen Umriß in seiner Winkelstellung an die Krümmung des Außenumfangs der Abdeckung (103) angepaßt ist und minimalen Abstand vom Außenumfang der Abdeckung hat, wodurch die Lücke zwischen der Innenfläche des Schneidelements und dem Außenumfang der Abdeckung im wesentlichen beseitigt ist, und
bei der das Schneidelement (57) einen Außenrand aufweist, dessen Umriß im wesentlichen konzentrisch zum Innenrand ist, so daß die Breite der Schneidkante im Verlaufe der Abnutzung des Schneidelements gleich bleibt.

8. Granulier-Vorrichtung nach Anspruch 7,
bei der ein gegen die Nabe (53) weisender Abschnitt der Abdeckung (103) an der Innenfläche der Nabe abnutzbar ist, wenn die Schneid-Vorrichtung zum Ausgleich der Abnutzung des Schneidelements (57) zum Werkzeug hin vorgeschoben wird,
bei der ein Abschnitt des Abdeckelements auf der gegen die Nabe weisenden Seite von kleinerer Breite als der übrige Abschnitt der Abdeckung ist, wodurch die Menge Abfallmaterial verringert wird, die durch die Abnutzung der Abdeckung entsteht.

9. Granulier-Vorrichtung nach Anspruch 6,
bei der das Abdeckelement (103) ein becherförmiges Bauteil ist, das sowohl die Bodenfläche als auch die Seitenfläche der Vertiefung bedeckt, oder ein schürzenförmiges Bauteil, das an der Seitenfläche der Vertiefung angeordnet ist.

10. Verfahren zum Granulieren eines geschmolzenen thermoplastischen Materials in einem flüssigen Medium unter Benutzung einer Granulier-Vorrichtung nach einem der vorhergehenden Ansprüche, wobei das Verfahren umfaßt:
das Zuführen von extrudiertem Material von der stromaufwärts gelegenen Seite der Werkzeughalteplatte zur Werkzeugstirnfläche, um zu bewirken, daß extrudiertes Material aus der Werkzeughalteplatte austritt, und das Drehen der Nabe, um zu bewirken, daß das an ihr angeordnete Schneidelement sich in der Nähe der stromabwärts gelegenen Fläche der Werkzeughalteplatte bewegt, wodurch das extrudierte Material granuliert wird, wobei die Verbindung zwischen der Schneid-Vorrichtung und dem Extrusionswerkzeug Granulatwanderung zwischen der Nabe und der Bodenfläche der Vertiefung verhindert.

## Revendications

1. Granulateur pour transformer en granulés un produit d'extrusion, ledit granulateur comprenant :
un plateau matrice d'extrusion (37) comprenant :
une face extérieure (45) de filière en aval du plateau matrice (37);
un anneau (49) de filière formé en aval de la face extérieure (45) de filière comportant une surface d'usure faisant saillie vers l'extérieur depuis la surface de filière pour former une cavité (35) au centre de l'anneau (49) de filière, et ladite cavité comportant une surface de fond (69, 111) en aval dudit plateau matrice (37); et
un moyen formant canal (44) s'étendant depuis l'amont du plateau matrice (37) jusqu'à la face extérieure (45) de filière conçu pour délivrer le produit d'extrusion provenant de l'amont du plateau matrice à la face extérieure pour l'extrusion, et ledit moyen formant canal formant un orifice (47) dans la face extérieure (45) de filière pour permettre au produit d'extrusion de sortir du plateau matrice (37);
un dispositif de coupe (51) monté de façon à pouvoir être entraîné en rotation en une position adjacente à la face extérieure (45) de filière, ledit dispositif de coupe comprenant :
un moyeu (53, 73, 109) qui peut être fixé à un arbre d'entraînement (55) pour être entraîné en rotation en relation espacée avec la face extérieure (45) de filière;
un élément coupant (57, 79) monté sur le moyeu (53) pour tourner avec celui-ci, ledit élément coupant comportant un bord de coupe destiné à suivre un mouvement adjacent à la surface aval du plateau matrice; et
une première surface sur le dispositif de coupe (51) en correspondance avec une deuxième surface sur le plateau matrice d'extrusion (37) de sorte qu'une interface est établie entre le dispositif de coupe et la filière d'extrusion qui permet la libre rotation du dispositif de coupe et forme une barrière pour empêcher la migration de granulés entre le moyeu (53) et ladite surface de fond (69, 111) de ladite cavité (35) au centre dudit anneau (49) de filière.

2. Granulateur selon la revendication 1, dans lequel ledit dispositif de coupe (51) comprend un élément de protection (33, 75, 103), ladite première surface est située en amont dudit élément de protection et fait face à la cavité (35) au centre de l'anneau (49) de filière, ledit élément de protection présente un diamètre extérieur sensiblement égal au diamètre intérieur dudit anneau (49) de filière permettant de ce fait audit bord de coupe de l'élément coupant (57) de se déplacer en une position adjacente à la surface aval de l'anneau de filière, et une interface est établie entre ladite première surface sur ledit élément de protection (33) et la deuxième surface du plateau matrice (37) qui permet la libre rotation du dispositif de coupe (51) et forme une barrière pour empêcher la migration de granulés entre la surface intérieure du moyeu (53) et la surface de fond de ladite cavité (35) au centre de l'anneau de filière.

3. Granulateur selon la revendication 2, dans lequel le moyeu (53) est une plaque circulaire comportant un axe central de rotation et qui peut tourner coaxialement à la face extérieure (45) de filière, ledit moyeu comportant une surface intérieure faisant face à la face extérieure de filière, une surface extérieure adjacente à l'arbre, et une périphérie extérieure,
ledit élément de protection (33, 75) est monté de manière fixe sur la périphérie extérieure du moyeu, et ledit élément de protection comportant une fente pour permettre l'insertion de l'élément coupant (57, 79) qui est attaché à la surface intérieure du moyeu faisant face à la filière, ledit élément coupant accroche la surface de l'anneau (49) de filière en formant un angle choisi dans l'intervalle allant d'environ 10° à environ 60°,
ledit élément coupant (57, 79) comporte un bord de coupe parallèle au plan de rotation du moyeu, la largeur du bord de coupe de l'élément coupant est sensiblement égale à celle dudit anneau de filière,
ledit élément coupant (57, 79) est une lame coupante comportant un bord intérieur dont le contour est dessiné de façon à se conformer dans sa position angulaire à la courbure de la périphérie extérieure de l'élément de protection et présente un jeu minimal avec la périphérie extérieure dudit élément de protection (33, 75) éliminant substantiellement de ce fait tout espace entre une surface intérieure de la lame coupante et la périphérie extérieure de l'élément de protection, et
ledit élément coupant comporte un bord extérieur dont le contour est dessiné de façon à être sensiblement concentrique avec le bord intérieur de sorte que la largeur du bord de coupe reste constante au fur et à mesure de l'usure de l'élément coupant.

4. Granulateur selon la revendication 3, dans lequel une partie de l'élément de protection (33) au niveau du côté faisant face à la filière fait saillie dans la cavité (35) formée par l'anneau (49) de filière, et ladite partie (71) de l'élément de protection faisant saillie dans la cavité peut être usée contre la surface de fond de la cavité au fur et à mesure de l'avancée du dispositif de coupe (51) vers la filière pour compenser l'usure de l'élément coupant (57).

5. Granulateur selon la revendication 2, dans lequel le moyeu (73) est une plaque circulaire comportant un axe central de rotation et qui peut tourner coaxialement en relation espacée à la face extérieure de filière, ledit moyeu (73) comportant une surface intérieure faisant face à la face extérieure de filière, une surface extérieure adjacente à l'arbre, et une périphérie extérieure,
ledit élément de protection (75) est un élément de protection en forme de godet monté de manière fixe sur la périphérie extérieure et la surface intérieure dudit moyeu de coupe, ledit élément de protection en forme de godet comportant une fente (77) au niveau de la périphérie extérieure dudit élément de protection pour permettre l'insertion de l'élément coupant (79);
un ressort (81) est fixé entre la surface intérieure du moyeu (73) faisant face à la filière et le côté de fond intérieur de l'élément de protection en forme de godet (75) pour maintenir la position désirée de l'élément de protection par rapport au plateau matrice; et
une interface est établie entre l'élément de protection en forme de godet (75) et la surface de l'anneau de filière qui permet la libre rotation du dispositif de coupe et forme une barrière pour empêcher la migration de granulés entre la surface de fond de l'élément de protection en forme de godet et la surface de fond de ladite cavité sur la face extérieure de filière.

6. Granulateur selon la revendication 1, dans lequel ledit granulateur comprend un élément de protection (103) monté de manière fixe sur la surface de ladite cavité au centre de l'anneau (49) de filière, ledit élément de protection présente un diamètre extérieur sensiblement égal au diamètre intérieur dudit anneau (49) de filière, ladite deuxième surface est le bord aval (34) dudit élément de protection, et une interface est établie entre le bord aval (34) de l'élément de protection (103) et la surface intérieure du moyeu (53) qui permet la libre rotation du dispositif de coupe et forme une barrière pour empêcher la migration de granulés entre la surface intérieure du moyeu et la surface de fond de ladite cavité sur la face extérieure de filière.

7. Granulateur selon la revendication 6, dans lequel le moyeu (53) est une plaque circulaire comportant un axe central de rotation et qui peut tourner coaxialement à la face extérieure de la filière, ledit moyeu comportant une surface intérieure faisant face à la face extérieure de filière, une surface extérieure adjacente à l'arbre, et une périphérie extérieure; dans lequel la périphérie extérieure de l'élément de protection (103) est maintenue à un jeu minimum avec la surface intérieure de l'élément coupant (57);
dans lequel ledit élément coupant (57) accroche la surface de l'anneau (49) de filière en formant un angle choisi dans l'intervalle allant d'environ 10° à environ 60°,
dans lequel ledit élément coupant (57) comporte un bord de coupe parallèle au plan de rotation du moyeu (53), la largeur du bord de coupe de l'élément coupant est sensiblement égale à celle dudit anneau (49) de filière,
dans lequel ledit élément coupant (57) comporte un bord intérieur dont le contour est dessiné de façon à se conformer dans sa position angulaire à la courbure de la périphérie extérieure de l'élément de protection (103) et présente un jeu minimal avec la périphérie extérieure dudit élément de protection éliminant substantiellement de ce fait l'espace entre la surface intérieure de l'élément coupant et la périphérie extérieure de l'élément de protection, et
dans lequel ledit élément coupant (57) comporte un bord extérieur dont le contour est dessiné de façon à être sensiblement concentrique avec le bord intérieur de sorte que la largeur du bord de coupe reste constante au fur et à mesure de l'usure de l'élément coupant.

8. Granulateur selon la revendication 7, dans lequel une partie de l'élément de protection (103) faisant face audit moyeu (53) peut être usée contre la surface intérieure du moyeu au fur et à mesure de l'avancée du dispositif de coupe vers la filière pour compenser l'usure de l'élément coupant (57); dans lequel une partie de l'élément de protection au niveau du côté faisant face au moyeu est plus fine en largeur que la partie restante de l'élément de protection réduisant de ce fait la quantité de déchet générée par l'usure de l'élément de protection.

9. Granulateur selon la revendication 6, dans lequel ledit élément de protection (103) est un élément en forme de godet couvrant à la fois la surface de fond et la surface latérale de ladite cavité, ou un élément en forme de jupe monté sur la surface latérale de la cavité.

10. Procédé de granulation d'un matière thermoplastique fondue dans un milieu liquide utilisant un granulateur selon l'une quelconque des revendications précédentes, le procédé comprenant le fait de délivrer un produit d'extrusion provenant du côté amont du plateau matrice à la face extérieure de filière pour faire sortir le produit d'extrusion du plateau matrice et de faire tourner le moyeu pour faire se déplacer l'élément coupant monté dessus de manière adjacente à la surface aval du plateau matrice de façon à transformer en granulés le produit d'extrusion, l'interface entre le dispositif de coupe et la filière d'extrusion empêchant la migration de granulés entre le moyeu et la surface de fond de la cavité.
